# FASCICULE DE BREVET EUROPEEN

(11) **EP 3 321 758 B1**
(45) Date de publication et mention de la délivrance du brevet: **19.10.2022**
(21) Numéro de dépôt: 17201267.6
(22) Date de dépôt: 13.11.2017
(51) Int. Cl.: G05D 1/02, B64C 25/40, G05D 1/00

(54) **PROCÉDÉ DE COMMANDE D'UN SYSTÈME DE TAXIAGE ELECTRIQUE**
STEUERVERFAHREN EINES ELEKTRISCHEN ROLLSYSTEMS
A METHOD OF CONTROLLING AN ELECTRICAL TAXIING SYSTEM

(30) Priorité: 14.11.2016 FR 1660977
(43) Date de publication de la demande: 16.05.2018
(73) Titulaire: Safran Landing Systems, 78140 Vélizy-Villacoublay (FR)
(72) Inventeur: GORCE, Clément, 78140 VELIZY-VILLACOUBLAY (FR)
(74) Mandataire: Lavaud, Thomas

(56) Documents cités:
- US-A- 4 939 651
- US-A1- 2006 235 610
- US-A1- 2015 175 257
- US-A1- 2016 082 947

## Description

L'invention concerne le domaine du taxiage ou roulage des aéronefs.

### ARRIERE PLAN DE L'INVENTION

Un système de taxiage installé sur un aéronef permet de déplacer l'aéronef durant les phases de taxiage de manière autonome, c'est-à-dire en évitant l'usage des moteurs principaux de l'aéronef.

Dans un système de taxiage électrique, des roues portées par un ou plusieurs atterrisseurs sont entraînées en rotation, durant les phases de taxiage, par des actionneurs comportant des moteurs électriques.

Lors des phases de taxiage d'un aéronef utilisant un tel système de taxiage, l'aéronef est donc mu par le ou les atterrisseurs portant les roues entraînées en rotation par le système de taxiage.

Il est important de contrôler précisément en vitesse un tel système de taxiage, notamment pendant les phases de manœuvre de l'aéronef (vers l'avant ou vers l'arrière) lorsque la vitesse au sol de l'aéronef est faible.

Typiquement, pour une vitesse au sol de l'aéronef de 2 nœuds, la précision requise est de 10%, soit 0,2 nœuds, soit environ 10cm/s. Une telle précision est relativement complexe à obtenir, d'autant que les mesures de vitesse au sol sont soumises à diverses sources d'imprécision : imprécision du ou des capteurs, résolution des données, délais de transmission, etc. La précision doit par ailleurs être robuste à de grandes variations d'efforts auxquels est soumis le système de taxiage, car la masse d'un aéronef peut varier du simple au double, et les effets de la pente de la piste sur laquelle roule l'aéronef sont importants.

Le document US 2015/175257 A1 divulgue un procédé similaire de commande d'un système de taxiage électrique.

Le document US 4 939 651 A divulgue un procédé de commande de la vitesse d'un véhicule sans conducteur.

### OBJET DE L'INVENTION

L'invention a pour objet d'améliorer la précision du contrôle à basse vitesse d'un système de taxiage électrique d'un aéronef.

### RESUME DE L'INVENTION

En vue de la réalisation de ce but, on propose un procédé de commande d'un système de taxiage électrique adapté à déplacer un aéronef au cours du taxiage de l'aéronef, comprenant les étapes de :
- générer une consigne de vitesse au sol de l'aéronef ;
- transformer la consigne de vitesse au sol en une consigne de vitesse optimisée présentant une courbe en fonction du temps ayant un profil prédéfini comportant une pluralité de portions linéaires ayant chacune une pente fonction de la consigne de vitesse au sol ;
- mettre en œuvre une boucle de régulation ayant pour consigne la consigne de vitesse optimisée ;
- générer une commande du système de taxiage électrique à partir d'une sortie de la boucle de régulation.

En transformant la consigne de vitesse au sol en une consigne de vitesse optimisée présentant une courbe en fonction du temps ayant un profil prédéfini, on impose ledit profil prédéfini en entrée de la boucle de régulation, et on évite ainsi toute instabilité dans la boucle de régulation. Il n'est en particulier pas nécessaire de mettre en œuvre un calcul d'accélération qui est une source d'imprécision importante.

L'invention sera mieux comprise à la lumière de la description qui suit d'un mode de mise en œuvre particulier non limitatif de l'invention.

### BREVE DESCRIPTION DES DESSINS

Il sera fait référence aux dessins annexés, parmi lesquels :
- la figure 1 représente une chaîne de traitement mise en œuvre dans un procédé de commande d'un système de taxiage électrique selon l'invention ;
- la figure 2 représente des courbes d'une consigne de vitesse au sol, d'une consigne de vitesse optimisée, et d'une vitesse mesurée ;
- la figure 3 représente une courbe d'un gain proportionnel d'un bloc proportionnel d'une boucle de régulation de la chaîne de traitement ;
- la figure 4 représente des courbes de vitesses mesurées, de gains proportionnels du bloc proportionnel et d'un angle d'orientation ;
- la figure 5 représente une courbe d'un gain intégrateur d'un bloc intégrateur de la boucle de régulation de la chaîne de traitement ;
- la figure 6 représente une courbe d'un gain dérivateur d'un bloc dérivateur de la boucle de régulation de la chaîne de traitement.

### DESCRIPTION DETAILLEE DE L'INVENTION

Le procédé de commande d'un système de taxiage électrique selon l'invention est ici mis en œuvre sur un aéronef.

L'aéronef comporte un atterrisseur principal et un atterrisseur auxiliaire qui est situé à l'avant de l'aéronef.

L'atterrisseur principal comprend une tige montée à coulissement dans un caisson de l'atterrisseur et portant deux roues.

Le système de taxiage électrique agit sur les roues de l'atterrisseur principal pour déplacer l'aéronef de manière autonome au cours du taxiage de l'aéronef.

L'atterrisseur auxiliaire comporte une partie orientable selon un angle d'orientation, qui est commandée pour diriger l'aéronef au cours du taxiage de l'aéronef.

Le système de taxiage électrique comporte ici un actionneur comprenant un moteur électrique, un module électrique de puissance (couramment appelé calculateur, contrôleur, électronique de puissance, etc.) et un module électrique de commande (couramment appelé calculateur, contrôleur, électronique de commande, etc.). Le module électrique de puissance et le module électrique de commande peuvent bien sûr être intégrés au sein d'une même unité électrique.

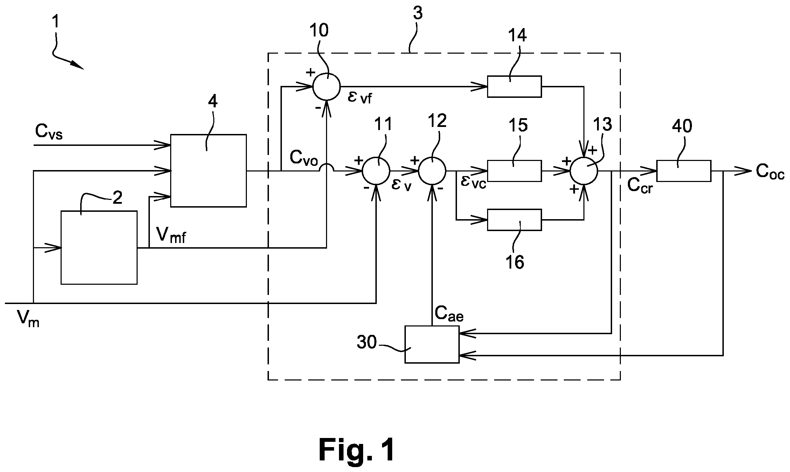

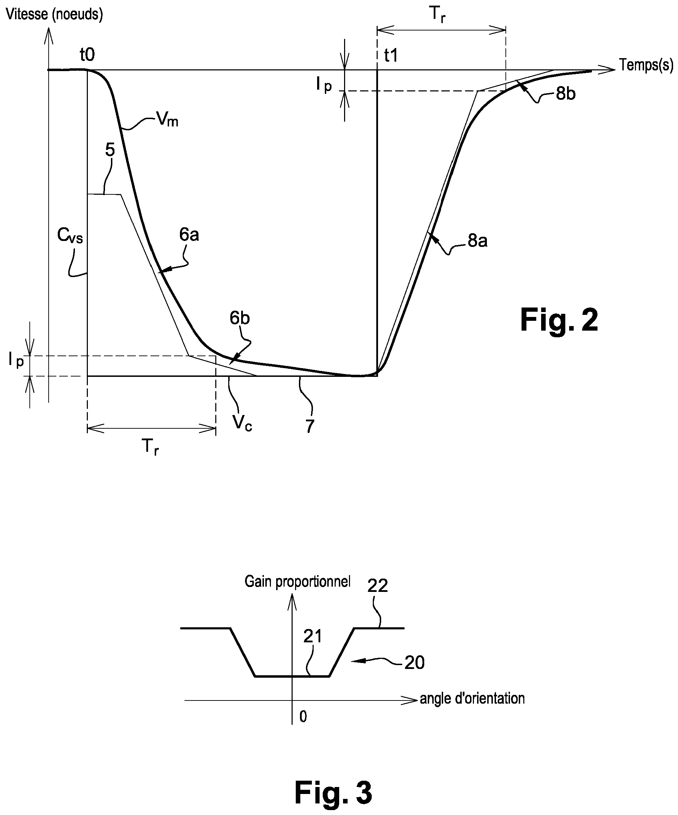

En référence aux figures 1 et 2, le pilote de l'aéronef génère, au cours des phases de taxiage, une consigne de vitesse au sol Cvs pour déplacer l'aéronef. Le procédé de commande selon l'invention met en œuvre une chaîne de traitement 1 qui, à partir de la consigne de vitesse au sol Cvs, contrôle en vitesse l'aéronef au cours des phases de taxiage de l'aéronef.

La consigne de vitesse au sol Cvs illustrée ici est une fonction échelon qui correspond à une manœuvre vers l'arrière de l'aéronef. Une telle manœuvre vers l'arrière est relativement critique, car il convient de ne pas actionner la pédale de frein pour éviter d'incliner l'aéronef. La consigne de vitesse au sol Cvs passe à un temps de démarrage t0 d'une vitesse nulle à une vitesse cible Vc constante (la vitesse cible Vc est ici négative), puis passe au temps d'arrêt t1 de la vitesse cible Vc à une vitesse nulle.

Le module électrique de commande génère, à partir de la consigne de vitesse au sol Cvs, une commande de couple Coc à appliquer sur les roues de l'atterrisseur principal. La commande de couple Coc est transmise au module électrique de puissance. Le module électrique de puissance génère à partir de la commande de couple Coc un courant électrique de commande et le transmet au moteur électrique.

La vitesse effective de l'aéronef est mesurée par des capteurs de vitesse de l'aéronef. Les capteurs de vitesse sont situés à l'avant de l'aéronef, à proximité du cockpit. Le contrôle en vitesse de l'aéronef est donc un contrôle d'une vitesse de l'avant de l'aéronef, ce qui permet au pilote de ressentir directement les effets du contrôle en vitesse.

La vitesse mesurée Vm est traitée par un bloc de traitement de mesure de vitesse 2 de la chaîne de traitement 1. Le bloc de traitement de mesure de vitesse 2 comporte un filtre destiné à supprimer un bruit de mesure présent dans la vitesse mesurée Vm, et donc à éviter que des oscillations résultant du bruit de mesure ne se propagent dans la chaîne de traitement 1. La fréquence de coupure de ce filtre est directement proportionnelle à la vitesse mesurée Vm : plus la vitesse mesurée Vm est élevée, plus le filtrage est important. On limite ainsi le retard induit par le filtrage à basse ou très basse vitesse, et on améliore la stabilité de la chaîne de traitement 1. Une vitesse mesurée filtrée Vmf est obtenue en sortie du bloc de traitement de mesure de vitesse 2.

La consigne de vitesse au sol Cvs est quant à elle traitée par un bloc de traitement de consigne de vitesse 4, qui transforme la consigne de vitesse au sol Cvs en une consigne de vitesse optimisée Cvo. Une boucle de régulation 3, qui a pour consigne la consigne de vitesse optimisée Cvo, est alors mise en œuvre.

La consigne de vitesse optimisée Cvo présente une courbe en fonction du temps ayant un profil prédéfini comportant une pluralité de portions linéaires.

Le profil prédéfini comporte une portion linéaire de démarrage 5, deux portions linéaires d'accélération 6, une portion linéaire de vitesse cible 7 et deux portions linéaires de décélération 8.

La portion linéaire de démarrage 5 présente une pente nulle et définit un palier de vitesse prédéterminé inférieur à la vitesse cible Vc.

Le palier de vitesse prédéterminé est utilisé pour assurer que l'aéronef peut être mis en mouvement malgré la survenue possible d'un phénomène dit de « roue carrée » et ce de manière instantanée. Lorsque l'aéronef est maintenu à l'arrêt au sol pendant un certain temps, les roues tendent à présenter, au niveau de leur circonférence au contact de la piste, une forme correspondant au profil de la piste. La roue (et la piste) oppose alors une résistance au déplacement de l'aéronef. Il convient, pour déplacer l'aéronef de manière instantanée, d'appliquer au démarrage un couple au moins égal à un couple de décollement. Le palier de vitesse prédéterminé permet de générer, dans la boucle de régulation 3, une erreur de vitesse εv importante (égale à la différence entre la consigne de vitesse optimisée Cvo et la vitesse mesurée Vm) qui produit une commande de couple Coc importante, au moins égale au couple de décollement. En l'absence de ce palier de vitesse prédéterminé, il existe un risque que le déplacement effectif de l'aéronef ne débute que plusieurs secondes après que ce déplacement ne soit commandé.

La portion linéaire de démarrage 5 est suivie par les deux portions linéaires d'accélération 6 qui amènent la consigne de vitesse optimisée Cvo à une valeur égale à celle de la consigne de vitesse au sol Cvs (soit à la vitesse cible Vc).

Parmi les deux portions linéaires d'accélération 6, on trouve une première portion linéaire d'accélération 6a qui amène la consigne de vitesse optimisée Cvo à une valeur comprise dans un intervalle de précision Ip après un temps de réponse Tr, et une deuxième portion linéaire d'accélération 6b qui amène la consigne de vitesse optimisée Cvo à une valeur égale à celle de la consigne de vitesse au sol Cvs (soit à la vitesse cible Vc).

L'intervalle de précision Ip et le temps de réponse Tr sont « spécifiés », c'est-à-dire qu'ils répondent à des spécifications de l'avionneur qui permettent d'assurer les performances du taxiage de l'aéronef.

La première portion linéaire d'accélération 6a permet ainsi d'obtenir une vitesse mesurée Vm qui soit dans l'intervalle de précision Ip après le temps de réponse Tr.

La pente de la deuxième portion linéaire d'accélération 6b est réglée pour assurer la stabilisation de la vitesse au sol de l'aéronef, de sorte que la vitesse mesurée Vm présente une valeur de dépassement (valeur communément désignée par le terme anglais « overshoot ») minimale par rapport à la consigne de vitesse au sol Cvo. On note que, comme la vitesse mesurée Vm est déjà dans l'intervalle de précision Ip, la valeur de la pente de la deuxième portion linéaire d'accélération 6b n'est pas liée à une spécification. La pente peut par ailleurs être relativement faible, et n'est pas prise en compte dans le temps de réponse Tr de la chaîne de traitement 1.

La pente de la première portion linéaire d'accélération 6a et la pente de la deuxième portion linéaire d'accélération 6b sont donc chacune fonction des spécifications de l'avionneur et/ou de l'erreur dynamique de la chaîne de traitement 1 et/ou de la consigne de vitesse au sol Cvs. On assure ainsi que la commande en couple Coc n'est pas surdimensionnée, et on réduit les contraintes mécaniques subies par l'atterrisseur principal et le système de taxiage électrique.

La portion linéaire de vitesse cible 7, qui suit la première portion linéaire d'accélération 6a et la deuxième portion linéaire d'accélération 6b, présente une pente nulle. La vitesse de l'aéronef est stabilisée à la valeur cible Vc, jusqu'au moment t1 où la consigne de vitesse au sol Cvs s'annule.

La portion linéaire de vitesse cible 7 est suivie par les deux portions linéaires de décélération 8 qui, lorsque la consigne de vitesse au sol Cvs devient nulle, amènent la consigne de vitesse optimisée Cvo à une valeur nulle.

Parmi les deux portions linéaires de décélération 8, on trouve une première portion linéaire de décélération 8a qui amène la consigne de vitesse optimisée Cvo à une valeur comprise dans l'intervalle de précision Ip après le temps de réponse Tr, et une deuxième portion linéaire de décélération 8b qui amène la consigne de vitesse optimisée Cvo à une valeur nulle.

La définition de la première portion linéaire de décélération 8a est donc similaire à la définition de la première portion linéaire d'accélération 6a.

La deuxième portion linéaire de décélération 8b est très importante, puisqu'elle permet de stopper l'aéronef de manière progressive et de conférer au système de taxiage électrique une précision satisfaisante et suffisante pour réaliser la fin de la manœuvre de l'aéronef.

La pente de la première portion linéaire de décélération 8a et la pente de la deuxième portion linéaire de décélération 8b sont donc chacune fonction des spécifications de l'avionneur et/ou de l'erreur dynamique de la chaîne de traitement 1 et/ou de la consigne de vitesse au sol Cvs.

On note qu'une portion linéaire équivalente à la portion linéaire de démarrage 5 n'est pas nécessaire puisque le phénomène de type « roue carrée » aide au freinage (action recherchée à cet instant).

Le profil prédéfini qui vient d'être décrit, comportant une pluralité de portions linéaires, permet de régler la chaîne de traitement 1 de manière à obtenir un contrôle en vitesse ayant un temps de réponse rapide, une bonne stabilité et une erreur statique faible.

La boucle de régulation 3 comporte un premier soustracteur 10, un deuxième soustracteur 11, un troisième soustracteur 12, un sommateur 13, ainsi qu'un bloc proportionnel 14, un bloc intégrateur 15 et un bloc dérivateur 16. Le bloc proportionnel 14, le bloc intégrateur 15 et le bloc dérivateur 16 forment un régulateur proportionnel, intégral, dérivé.

Le premier soustracteur 10 retranche à la consigne de vitesse optimisée Cvo la vitesse mesurée filtrée Vmf pour produire une erreur de vitesse filtrée εvf.

L'erreur de vitesse filtrée εvf est appliquée en entrée du bloc proportionnel 14.

Il est préférable que l'erreur de vitesse soit filtrée en entrée du bloc proportionnel 14, pour éviter d'obtenir en sortie du bloc proportionnel 14 un niveau de bruit équivalent à celui présent dans la vitesse mesurée Vm. A cause de ce filtrage, le bloc proportionnel 14 risque cependant de générer un retard et créer de l'instabilité dans la chaîne de traitement 1.

En référence à la figure 3, on choisit donc un bloc proportionnel 14 qui présente un gain proportionnel 20 dépendant de l'angle d'orientation de la partie orientable de l'atterrisseur auxiliaire de l'aéronef.

En effet, comme le contrôle en vitesse de l'aéronef est un contrôle d'une vitesse de l'avant de l'aéronef, la vitesse contrôlée dépend de l'angle d'orientation. En définissant une valeur faible 21 du gain proportionnel 20 lorsque l'angle d'orientation est proche de zéro, on diminue la sensibilité au bruit de la mesure de vitesse (présent dans la vitesse mesurée Vs). Cette valeur faible 21 du gain proportionnel 20 est seulement déterminée par les caractéristiques des phases d'accélération (et donc des portions linéaires d'accélération 6) et de décélération (et donc des portions linéaires de décélération 8) pour obtenir le temps de réponse Tr requis.

Lorsque l'angle d'orientation augmente (en valeur absolue), la dynamique de l'avant de l'aéronef augmente aussi. Le gain proportionnel 20 du bloc proportionnel 14 est alors augmenté et atteint une valeur élevée 22 qui permet à la chaîne de traitement 1 d'être plus robuste aux perturbations, et qui permet de garder la vitesse mesurée Vm de l'aéronef dans l'intervalle de précision Ip spécifié. La valeur élevée 22 du gain proportionnel 20 est déterminée pour que la chaîne de traitement 1 soit robuste aux manœuvres d'orientation à vitesse stabilisée (c'est à dire à la valeur de la vitesse cible Vc).

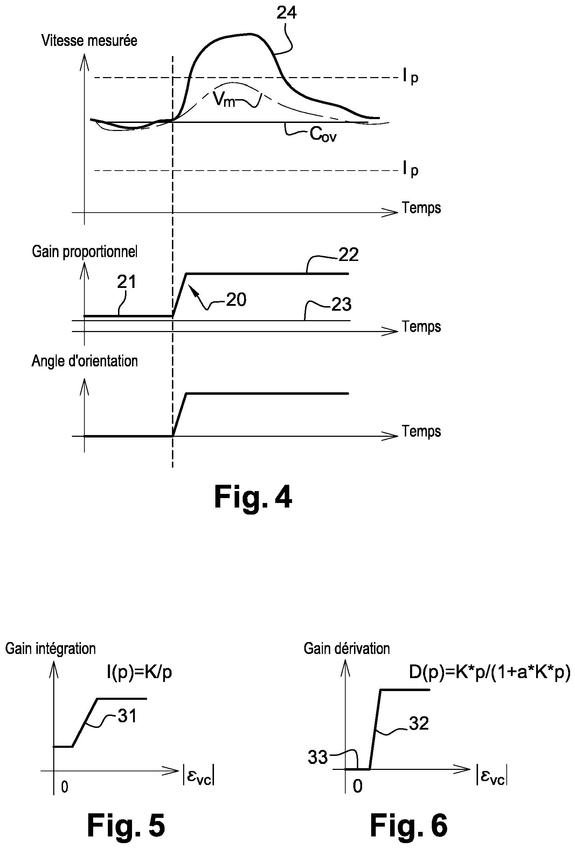

L'intérêt d'utiliser un gain proportionnel 20 qui soit fonction de l'angle d'orientation est illustré sur la figure 4.

On voit que, lorsque le gain proportionnel utilisé est un gain constant 23 de valeur faible, la dynamique d'une manœuvre d'orientation est trop importante pour la chaîne de traitement 1, car l'augmentation de vitesse requise est trop importante. La courbe de vitesse mesurée 24 présente alors une valeur de dépassement importante par rapport à l'intervalle de précision Ip.

Lorsque le gain proportionnel 20 du bloc proportionnel 14 dépend de l'angle d'orientation en présentant une valeur faible 21 lorsque l'angle d'orientation est faible et une valeur élevée 22 lorsque l'angle d'orientation est plus important, on améliore la réactivité de la chaîne de traitement 1 et on maintient la vitesse mesurée Vm dans l'intervalle de précision Ip.

Il n'est pas nécessaire que l'angle d'orientation soit très important pour observer ce phénomène : un angle de 40°, fréquemment obtenu lors d'une manœuvre de repoussage de l'aéronef, est suffisant.

Le deuxième soustracteur 11 retranche à la consigne de vitesse optimisée Cvo la vitesse mesurée Vm (non filtrée) pour produire l'erreur de vitesse εv. Le troisième soustracteur 12 retranche à l'erreur de vitesse εv la sortie d'un bloc d'anti-emballement 30 (qui sera décrit plus loin dans ce document) pour produire une erreur de vitesse corrigée εvc.

L'erreur de vitesse corrigée εvc est appliquée en entrée du bloc intégrateur 15.

On note que l'entrée du bloc intégrateur 15 ne nécessite pas de filtrage, car le bloc intégrateur 15 constitue un filtre en lui-même. Le bloc intégrateur 15 filtre le bruit présent dans la vitesse mesurée Vm sans ajouter de retard dû à un traitement de la vitesse. L'erreur de vitesse εv est par ailleurs corrigée par le bloc d'anti-emballement 30.

En référence à la figure 5, le gain intégrateur 31 du bloc intégrateur 15 dépend de l'erreur de vitesse corrigée absolue |εvc|.

Le gain intégrateur 31 du bloc intégrateur 15 est : I(p)=K/p.

Lorsque l'erreur de vitesse corrigée absolue |εvc| est élevée, c'est à dire pendant les phases d'accélération et de décélération, un gain intégrateur 31 élevé est utilisé pour rendre la chaîne de traitement 1 plus réactive et pour obtenir le temps de réponse Tr spécifié.

Lorsque l'erreur de vitesse corrigée absolue |εvc| est faible, c'est à dire lorsque la vitesse mesurée Vm est proche de la consigne de vitesse optimisée Cvo, le niveau d'intégration requis est moins important pour le comportement dynamique. L'intégration permet principalement de compenser l'erreur statique. De plus, comme c'est le cas avec le gain proportionnel 20, la valeur faible du gain intégrateur 31 à vitesse stabilisée permet de réduire la sensibilité au bruit présent dans la vitesse mesurée Vm.

L'erreur de vitesse corrigée εvc est aussi appliquée en entrée du bloc dérivateur 16. A nouveau, on note que l'entrée du bloc dérivateur 16 ne nécessite pas de filtrage, car le bloc dérivateur 16 constitue un filtre en lui-même. Le bloc dérivateur 16 filtre le bruit présent dans la vitesse mesurée Vm sans ajouter de retard dû à un traitement de la vitesse. L'erreur de vitesse εv est par ailleurs corrigée par le bloc d'anti-emballement 30.

En référence à la figure 6, le gain dérivateur 32 du bloc dérivateur dépend de l'erreur de vitesse corrigée absolue |εvc|.

Le gain dérivateur 32 du bloc dérivateur 16 est : D(p)=K*p/(1+a*K*p).

Lorsque l'erreur de vitesse corrigée absolue |εvc| est élevée, c'est à dire pendant les phases d'accélération et de décélération, une valeur élevée du gain dérivateur 32 est utilisée pour rendre la chaîne de traitement 1 plus réactive et pour stabiliser la chaîne de traitement en évitant les valeurs de dépassement importantes.

Lorsque l'erreur de vitesse corrigée absolue |εvc| est faible, c'est à dire lorsque la vitesse mesurée Vm est proche de la consigne de vitesse optimisée Cvo, le niveau de dérivation requis est moins important pour le comportement dynamique. En outre, le bloc dérivateur 16 peut produire des bruits de calcul lorsque l'erreur de vitesse corrigée absolue |εvc| est très faible. Par conséquent, le bloc dérivateur 16 n'est pas utilisé lorsque la vitesse mesurée Vm est très proche de la consigne de vitesse optimisée Cvo. Plus précisément, comme cela est visible sur la figure 6, le gain dérivateur 32 est nul lorsque l'erreur de vitesse corrigée absolue |εvc| est très faible (zone 33 de la figure 6).

Le sommateur 13 additionne la sortie du bloc proportionnel 14, la sortie du bloc intégrateur 15 et la sortie du bloc dérivateur 16 pour obtenir une commande de couple régulé Ccr en sortie de la boucle de régulation 3.

La commande de couple régulé Ccr est appliquée en entrée d'un bloc de protection 40 pour obtenir la commande de couple Coc. Le bloc de protection 40 met ici en œuvre des fonctions de limitation de pente et de saturation.

Le bloc d'anti-emballement 30 met en œuvre une fonction d'anti-emballement (fonction communément désignée par le terme anglais « anti wind-up »). Le bloc d'anti-emballement 30, qui reçoit la commande de couple régulé Ccr et la commande de couple Coc, produit un couple d'anti-emballement Cae défini comme étant égal à la différence entre la dernière commande de couple régulé Ccr et la dernière commande de couple Coc. Le couple d'anti-emballement Cae peut être pondéré par un coefficient de pondération si nécessaire. La fonction d'anti-emballement est une fonction d'anti-emballement par rétroaction. Elle permet de garder la sortie du bloc intégrateur 15 et la sortie du bloc dérivateur 16 hors des zones de saturation. On conserve ainsi une bonne réactivité de la chaîne de traitement 1, car il n'est pas nécessaire de réduire les niveaux de filtrage.

Bien entendu, l'invention n'est pas limitée au mode de réalisation décrit mais englobe toute variante entrant dans le champ de l'invention telle que définie par les revendications.

Bien que l'on ait décrit deux portions linéaires d'accélération (et de décélération), on pourra utiliser une seule portion linéaire d'accélération (et de décélération), ou bien un nombre différent de portions linéaire d'accélération (et de décélération).

Bien que l'on ait indiqué que les capteurs de vitesse sont situés à l'avant de l'aéronef, les capteurs peuvent être situés à d'autres endroits, et peuvent par exemple comprendre un capteur de vitesse du moteur électrique, un capteur de vitesse d'une roue d'un atterrisseur principal ou d'un atterrisseur auxiliaire.

On peut aussi effectuer un contrôle en vitesse sur la base d'une vitesse différente de la vitesse avant de l'aéronef, et bien sûr, générer en sortie de la chaîne de traitement une commande différente de la commande de couple.

## Revendications

1. Procédé de commande d'un système de taxiage électrique adapté à déplacer un aéronef au cours du taxiage de l'aéronef, comprenant les étapes de :
- générer une consigne de vitesse au sol (Cvs) de l'aéronef ;
- transformer la consigne de vitesse au sol (Cvs) en une consigne de vitesse optimisée (Cvo)
- mettre en œuvre une boucle de régulation (3) ayant pour consigne la consigne de vitesse optimisée (Cvo) ;
- générer une commande (Coc) du système de taxiage électrique à partir d'une sortie de la boucle de régulation (3),
**caractérisé en ce que** la consigne de vitesse optimisée (Cvo) présente une courbe en fonction du temps ayant un profil prédéfini comportant une pluralité de portions linéaires (5, 6, 7, 8) ayant chacune une pente fonction de la consigne de vitesse au sol.

2. Procédé de commande selon la revendication 1, dans lequel la pluralité de portions linéaires comprend une portion linéaire de démarrage (5) qui présente une pente nulle et définit un palier de vitesse prédéterminé inférieur à la consigne de vitesse au sol (Cvs).

3. Procédé de commande selon la revendication 2, dans lequel la portion linéaire de démarrage (5) est suivie par une pluralité de portions linéaires d'accélération (6) qui amènent la consigne de vitesse optimisée (Cvo) à une valeur égale à celle de la consigne de vitesse au sol (Cvs).

4. Procédé de commande selon la revendication 3, dans lequel la pluralité de portions linéaires d'accélération comporte une première portion linéaire d'accélération (6a) qui amène la consigne de vitesse optimisée (Cvo) à une valeur comprise dans un intervalle de précision (Ip) spécifié après un temps de réponse (Tr) spécifié, et une deuxième portion linéaire d'accélération (6b) qui amène la consigne de vitesse optimisée à une valeur égale à celle de la consigne de vitesse au sol.

5. Procédé de commande selon la revendication 1, dans lequel la pluralité de portions linéaires comporte une pluralité de portions linéaires de décélération (8) qui, lorsque la consigne de vitesse au sol devient nulle, amènent la consigne de vitesse optimisée à une valeur nulle.

6. Procédé de commande selon la revendication 5, dans lequel la pluralité de portions linéaires de décélération comporte une première portion linéaire de décélération (8a) qui amène la consigne de vitesse optimisée à une valeur de vitesse comprise dans un intervalle de précision spécifié après un temps de réponse spécifié, et une deuxième portion linéaire de décélération (8b) qui amène la consigne de vitesse optimisée à une valeur nulle.

7. Procédé de commande selon la revendication 1, dans lequel la boucle de régulation (3) comporte un régulateur proportionnel, intégral, dérivé comprenant un bloc proportionnel (14), un bloc intégrateur (15) et un bloc dérivateur (16).

8. Procédé de commande selon la revendication 7, dans lequel une erreur de vitesse filtrée est appliquée en entrée du bloc proportionnel (14).

9. Procédé de commande selon la revendication 7, dans lequel le bloc proportionnel (14) présente un gain qui dépend d'un angle d'orientation d'une partie orientable d'un atterrisseur de l'aéronef.

10. Procédé de commande selon la revendication 7, dans lequel le bloc intégrateur (15) présente un gain qui dépend d'une erreur de vitesse.

11. Procédé de commande selon la revendication 7, dans lequel le bloc dérivateur (16) présente un gain qui dépend d'une erreur de vitesse.

12. Procédé de commande selon la revendication 11, dans lequel le gain du bloc dérivateur (16) est nul lorsque l'erreur de vitesse est nulle.

13. Procédé de commande selon la revendication 1, dans lequel la boucle de régulation comporte un bloc d'anti-emballement (30).

14. Procédé de commande selon la revendication 1, dans lequel la commande du système de taxiage électrique est une commande en couple à appliquer sur des roues de l'aéronef.

## Patentansprüche

1. Steuerverfahren zum Steuern eines elektrischen Rollsystems, das dazu geeignet ist, ein Luftfahrzeug während seines Rollens zu bewegen, umfassend die Schritte:
- Erzeugen eines Bodengeschwindigkeitssollwerts (Cvs) des Luftfahrzeugs;
- Transformieren des Bodengeschwindigkeitssollwerts (Cvs) in einen optimierten Geschwindigkeitssollwert (Cvo);
- Implementieren eines Regelkreises (3), der als Sollwert den optimierten Geschwindigkeitssollwert (Cvo) hat;
- Erzeugen eines Befehls (Coc) für das elektrische Rollsystem anhand einer Ausgangsgröße des Regelkreises (3),
**dadurch gekennzeichnet, dass** der optimierte Geschwindigkeitssollwert (Cvo) eine Kurve in Abhängigkeit von der Zeit aufweist, die ein vordefiniertes Profil hat, das eine Vielzahl von linearen Abschnitten (5, 6, 7, 8) umfasst, die jeweils eine Steigung in Abhängigkeit vom Bodengeschwindigkeitssollwert haben.

2. Steuerverfahren nach Anspruch 1, bei dem die Vielzahl von linearen Abschnitten einen linearen Startabschnitt (5) umfasst, der eine Null-Steigung aufweist und eine vorbestimmte Geschwindigkeitsstufe definiert, die niedriger als der Bodengeschwindigkeitssollwert (Cvs) ist.

3. Steuerverfahren nach Anspruch 2, bei dem auf den linearen Startabschnitt (5) eine Vielzahl von linearen Beschleunigungsabschnitten (6) folgt, die den optimierten Geschwindigkeitssollwert (Cvo) auf einen Wert gleich dem des Bodengeschwindigkeitssollwerts (Cvs) bringen.

4. Steuerverfahren nach Anspruch 3, bei dem die Vielzahl von linearen Beschleunigungsabschnitten einen ersten linearen Beschleunigungsabschnitt (6a) umfasst, der den optimierten Geschwindigkeitssollwert (Cvo) auf einen Wert bringt, der nach einer festgelegten Ansprechzeit (Tr) in einem festgelegten Genauigkeitsintervall (Ip) liegt, und einen zweiten linearen Beschleunigungsabschnitt (6b), der den optimierten Geschwindigkeitssollwert auf einen Wert gleich dem des Bodengeschwindigkeitssollwerts bringt.

5. Steuerverfahren nach Anspruch 1, bei dem die Vielzahl von linearen Abschnitten eine Vielzahl von linearen Verzögerungsabschnitten (8) umfasst, die, wenn der Bodengeschwindigkeitssollwert Null wird, den optimierten Geschwindigkeitssollwert auf einen Wert von Null bringen.

6. Steuerverfahren nach Anspruch 5, bei dem die Vielzahl von linearen Verzögerungsabschnitten einen ersten linearen Verzögerungsabschnitt (8a) umfasst, der den optimierten Geschwindigkeitssollwert auf einen Geschwindigkeitswert bringt, der nach einer festgelegten Ansprechzeit in einem festgelegten Genauigkeitsintervall liegt, und einen zweiten linearen Verzögerungsabschnitt (8b), der den optimierten Geschwindigkeitssollwert auf einen Wert von Null bringt.

7. Steuerverfahren nach Anspruch 1, bei dem der Regelkreis (3) einen Proportional-Integral-Differential-Regler umfasst, der einen Proportional-Block (14), einen Integral-Block (15) und einen Differential-Block (16) umfasst.

8. Steuerverfahren nach Anspruch 7, bei dem ein gefilterter Geschwindigkeitsfehler am Eingang des Proportional-Blocks (14) angelegt wird.

9. Steuerverfahren nach Anspruch 7, bei dem der Proportional-Block (14) eine Verstärkung aufweist, die von einem Ausrichtungswinkel eines ausrichtbaren Teils eines Fahrwerks des Luftfahrzeugs abhängt.

10. Steuerverfahren nach Anspruch 7, bei dem der Integral-Block (15) eine Verstärkung aufweist, die von einem Geschwindigkeitsfehler abhängt.

11. Steuerverfahren nach Anspruch 7, bei dem der Differential-Block (16) eine Verstärkung aufweist, die von einem Geschwindigkeitsfehler abhängt.

12. Steuerverfahren nach Anspruch 11, bei dem die Verstärkung des Differential-Blocks (16) Null ist, wenn der Geschwindigkeitsfehler Null ist.

13. Steuerverfahren nach Anspruch 1, bei dem der Regelkreis einen Überdrehzahlschutz-Block (30) umfasst.

14. Steuerverfahren nach Anspruch 1, bei dem der Befehl des elektrischen Rollsystems ein Drehmomentbefehl zum Aufbringen auf Räder des Luftfahrzeugs ist.

## Claims

1. A control method for controlling an electrical taxiing system adapted to moving an aircraft while it is taxiing, the method comprising the steps of:
- generating a ground speed setpoint (Cvs) for the aircraft;
- transforming the ground speed setpoint (Cvs) into an optimized speed setpoint (Cvo);
- implementing a regulator loop (3) having the optimized speed setpoint (Cvo) as its setpoint; and
- generating a command (Coc) for the electrical taxiing system from an output of the regulator loop (3), **characterized in that** the optimized speed setpoint (Cvo) presents a curve as a function of time that has a predefined function comprising a plurality of linear portions (5, 6, 7, 8), each having a slope that is a function of the ground speed setpoint.

2. A control method according to claim 1, wherein the plurality of linear portions comprises a starting linear portion (5) presenting a slope of zero and defining a predetermined speed level that is smaller than the ground speed setpoint (Cvs).

3. A control method according to claim 2, wherein the starting linear portion (5) is followed by a plurality of acceleration linear portions (6) that bring the optimized speed setpoint (Cvo) to a value equal to the value of the ground speed setpoint (Cvs).

4. A control method according to claim 2, wherein the plurality of acceleration linear portions comprises a first acceleration linear portion (6a) that brings the optimized speed setpoint (Cvo) to a value lying within a specified accuracy range (Ip) by the end of a specified response time (Tr), and a second acceleration linear portion (6b) that brings the optimized speed setpoint to a value equal to the value of the ground speed setpoint.

5. A control method according to claim 1, wherein the plurality of linear portions includes a plurality of deceleration linear portions (8) that, when the ground speed setpoint becomes zero, bring the optimized speed setpoint to a value of zero.

6. A control method according to claim 5, wherein the plurality of deceleration linear portions comprise a first deceleration linear portion (8a) that brings the optimized speed setpoint to a speed value lying within a specified accuracy range by the end of a specified response time, and a second deceleration linear portion (8b) that brings the optimized speed setpoint to a value of zero.

7. A control method according to claim 1, wherein the regulator loop (3) comprises a proportional, integral, and derivative regulator having a proportional block (14), an integrator block (15), and a differentiator block (16).

8. A control method according to claim 7, wherein a filtered speed error is applied as input to the proportional block (14).

9. A control method according to claim 7, wherein the proportional block (14) presents gain that depends on a steering angle of a steerable portion of landing gear of the aircraft.

10. A control method according to claim 7, wherein the integrator block (15) presents gain that depends on a speed error.

11. A control method according to claim 7, wherein the differentiator block (16) presents gain that depends on a speed error.

12. A control method according to claim 11, wherein the gain of the differentiator block (16) is zero when the speed error is zero.

13. A control method according to claim 1, wherein the regulator loop includes an anti-windup block (30).

14. A control method according to claim 1, wherein the command of the electrical taxiing system is a torque command for applying to wheels of the aircraft.
